# EUROPEAN PATENT APPLICATION

(11) **EP 2 190 104 A1**
(43) Date of publication of application: **26.05.2010**
(21) Application number: 08792554.1
(22) Date of filing: 20.08.2008
(51) Int. Cl.: H02K 7/102, F16D 55/28, F16D 65/27

(54) **HOLLOW ACTUATOR**

(30) Priority: 11.09.2007 JP 2007235028
(71) Applicant: Kabushiki Kaisha Yaskawa Denki, Kitakyushu-shi, Fukuoka 806-0004 (JP)
(72) Inventor: TOMINAGA, Ryuuichirou, 806-0004 Fukuoka (JP); MATSUO, Tomohiro, 806-0004 Fukuoka (JP)
(74) Representative: Gendron, Vincent Christian
(86) International application number: PCT/JP2008/064783
(87) International publication number: WO 2009/034817

(57) **Abstract**

The present invention provides a hollow actuator that has a short axial length so that the hollow actuator can be applied to a joint of a robot and with which brake can be securely activated.

The hollow actuator includes a motor section (1), a reduction gear section (9), a brake section (11), a rotation position detecting section (16), and a shaft (15) having a hollow shape and transmitting rotation, wherein the motor section (1) and the brake section (11) are disposed in the same chamber.

## Description

### Technical Field

The present invention relates to a hollow actuator used in a joint of a robot.

### Background Art

Industrial robots have been increasingly used to assemble automobiles on automobile assembly lines and to assemble other components with or without human intervention. In order to perform such an assembly operation, it is required that a robot be capable of performing complex movements and avoidance movements that have not been realized previously and that a robot have a large working envelope. Moreover, it is required that a robot have a small footprint because a large number of robots are disposed so as to perform the operation. Therefore, it is desired that each arm of the robot be operated with an actuator disposed in a joint so that the arm can move like a human arm, in contrast to existing robots in which the arms are operated with a joint at the base end.
In order to realize such a robot, it is necessary that cables be routed within the arm of the robot so that the cables are not exposed to the outside and interference with external objects does not occur. However, when routing the cables through a joint of an existing robot, there is a problem in that the size of the joint increases because the joint contains a combination of a motor and a reduction gear. Therefore, a hollow actuator through which cables can be routed has been desired.

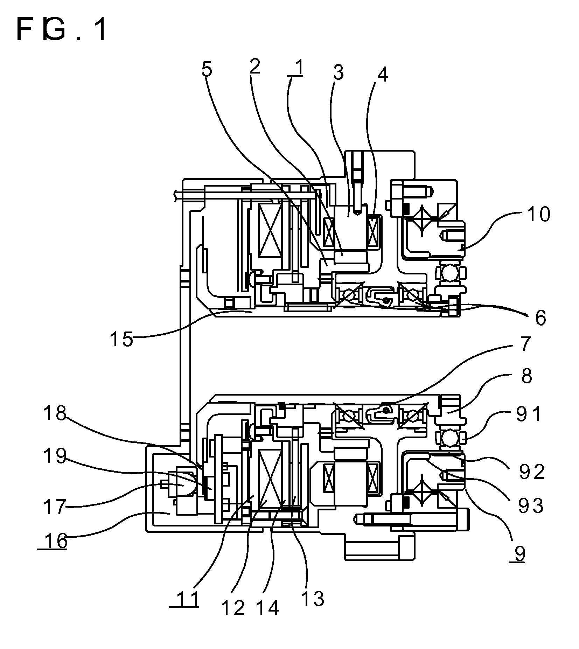

Among existing hollow actuators, a hollow actuator including an AC servo motor having a hollow shaft and a reduction gear mechanism has been proposed (see, for example, Patent Document 1 and Patent Document 2). Referring to Fig. 2, an existing hollow actuator will be described. An output shaft 113 having a cup-like shape is disposed on an inner side of a reduction gear frame 111 of a harmonic drive gearing 101 with a bearing 12 therebetween. A circular spline 114 is disposed on an inner side the output shaft 113. A field core section 151 is disposed at one end of a flexible turning barrel 115, and the field core section 151 is fixed to an end face of the reduction gear frame 111. An external gear 116 is disposed near the other end of the flexible turning barrel 115, and the external gear 116 engages with the circular spline 114. A wave bearing 117 contacts an inner side of the flexible turning barrel 115 so that torque is transmitted from the wave bearing 117 to the flexible turning barrel 115. The wave bearing 117 is fixed to a motor shaft 121. The motor shaft 121 inputs torque generated by a motor 102, which will be described below, to the harmonic drive gearing 101. One end of the motor shaft 121 is supported by an inner side of the output shaft 113 via a bearing 118. A field core 132 is fixed to an end face of the reduction gear frame 111. The field core 132 has a hollow yoke 131 with a cup-like shape, and the hollow yoke 131 is inserted into the flexible turning barrel 115 with a gap therebetween. A stationary section 141 of a rotation detector 104 is fixed to an inner side of the hollow yoke 131. Inward from the stationary section 141, rotation sections 142 are fixed to the motor shaft 121 so that the rotation sections 142 face the stationary section 141 with a gap therebetween. A motor frame 122 having a cylindrical shape is fixed to the other end face of the field core 132. A stator 125 including a stator iron core 124 is fixed to an inner side of the motor frame 122. The stator iron core 124 has an annular shape, and is provided with an armature coil 123. A rotor 127 is disposed inward from the stator 125. The rotor 127 has a permanent magnet 126 that serves as a field magnet of the motor 102. The permanent magnet 126 is fixed to a motor yoke 128 so as to face the stator iron core 124 with a gap therebetween. The motor yoke 128 has a cup-like shape, and is fixed to the motor shaft 121. A second bracket 105 is fixed to a non-output-side end face of the frame 122. The second bracket 105 supports the other end of the motor shaft 121 via a bearing 153 that is disposed on a housing section 152 that protrudes from an inner side of the bracket 105. A rotation-side permanent magnet 133 of a brake 103 is fixed to an inner periphery of the motor yoke 128 having a cup-like shape. The rotation-side permanent magnet 133 has the same number of poles as the motor 102. The poles of the rotation-side permanent magnet 133 are disposed at regular intervals in the circumferential direction so that adjacent poles have different polarities. Thus, a magnetic path of the permanent magnet 126 of the motor 102 is shared. The rotation-side permanent magnet 133 is an annular permanent magnet whose circumference is magnetized at a regular pitch. Inward from the rotation-side permanent magnet 133, a stationary-side permanent magnet 134 is fixed to the housing section 152 of the bracket 105 so as to face the rotation-side permanent magnet 133 with a gap therebetween.

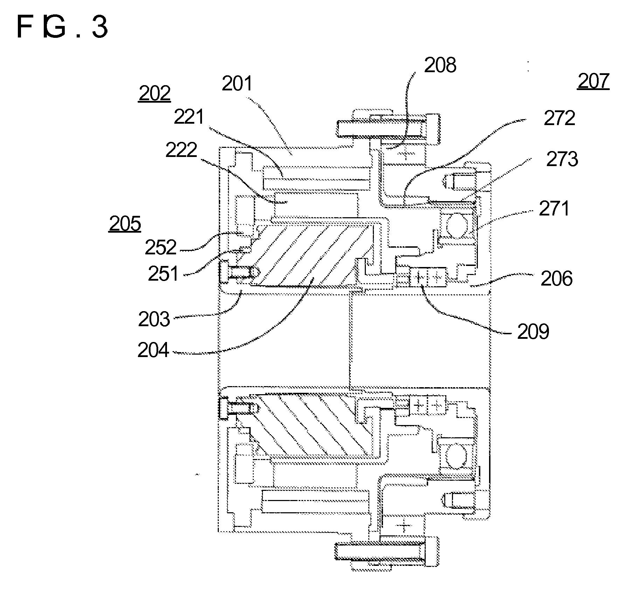

Fig. 3 illustrates a hollow actuator including an electromagnetic brake. A motor 202 includes a stator 221 fixed to a frame 201 and a rotor 222 having a cup-like shape. A hollow shaft 203 is fixed to the frame 201. An electromagnetic brake 204 is fixed to the outer periphery of the hollow shaft 203. A position detector 205 includes a magnetic sensor 251 for detecting an angle, which is attached to a fixed shaft 203, and an angle detection magnet 252 fixed to a non-load side of the rotor 222. A reduction gear 207 includes a wave generator 271 connected to the rotor 222, a flexible spline 72 fixed to the frame 201, and a circular spline 273 that is rotatably supported. An output field core section has a hollow structure, and also serves as a member for supporting a high speed side bearing 209. The rotor 222 is supported by the high speed side bearing 209.
The hollow actuator described above can be applied to a joint of a robot.
[Patent Document 1] Japanese Unexamined Utility Model Registration Application Publication No. 7-42215 (page 3, Fig. 1)
[Patent Document 2] Japanese Unexamined Patent Application Publication No. 2006-149139 (page 3, Fig. 1)

### Disclosure of Invention

### Problems to be Solved by the Invention

In order to apply the hollow actuator to a joint of an industrial robot, it is necessary that the hollow actuator has a brake. Without a brake, safety is not ensured because a robot cannot correctly maintain its posture when a power failure of a factory occurs or when the robot has to maintain its posture in the home position.
Existing hollow actuators each have a mechanism including an electromagnetic brake in which permanent magnets face each other so that a position can be maintained owing to attraction between the permanent magnets. This mechanism has an advantage in that dust generated by the brake does not cause a problem because the brake operates in a non-contacting manner. However, the brake force increases as the rotation speed increases, because a brake force due to an eddy current is generated in addition to the magnetic attraction between the permanent magnets. Therefore, there is a problem in that the brake force changes in accordance with the speed. There is another problem in that, because a position is held with magnetic attraction between the permanent magnets in a stationary state, the position may be changed when an external force larger than the magnetic attraction is applied.
The present invention, which is achieved in view of such problems, provides a hollow actuator having a short axial length so that the hollow actuator can be applied to a joint of a robot and with which a brake can be securely activated.

### Means for Solving the Problems

In order to solve the problems, the present invention provides the following control method.
According to the invention described in Claim 1, a hollow actuator includes a motor section, a reduction gear section, a brake section, a rotation position detecting section, and a shaft having a hollow shape and transmitting rotation, wherein the motor section and the brake section are disposed in a same chamber.
According to the invention described in Claim 2, in the hollow actuator, the reduction gear section, the motor section, the brake section, and the rotation detection section are disposed in this order from a load side, and the motor section and the brake section are disposed in a same chamber.
According to the invention described in Claim 3, in the hollow actuator, the brake section and the rotation position detecting section have a common field core.
According to the invention described in Claim 4, a hollow actuator includes a motor section, a reduction gear section, a brake section, a rotation position detecting section, and a shaft having a hollow shape and transmitting rotation, wherein the brake section includes a brake coil disposed on a field core, and an armature disposed so as to face the brake coil, wherein the rotation detecting section includes a detector disposed on the field core, and a slit substrate and an LED that are disposed so as to face the detector, and wherein the field core serves as a flange.
According to the invention described in Claim 5, in the hollow actuator, the brake section includes the brake coil disposed on the field core, the armature is disposed so as to face the brake coil, and the armature is disposed in a vicinity of an end of the motor section.
According to the invention described in Claim 6, in the hollow actuator, an armature coil of the motor section is terminated in the motor section, and a cable extends through an opening in a field core of the brake section.
According to the invention described in Claim 7, a hollow actuator includes a motor section, a reduction gear section, a brake section, a rotation position detecting section, and a shaft having a hollow shape and transmitting rotation, wherein the motor section and the brake section are disposed in a same chamber, and wherein the motor section and the brake section are separated from the reduction gear section and the encoder section by separation means so that dust from the brake section does not enter the reduction gear section and the encoder section.
According to the invention described in Claim 8, in the hollow actuator, the separation means for separating the reduction gear section from the motor section and the brake section is a side plate.

### Advantages

With the inventions described in Claim 1 to 8, the motor section and the brake section are disposed in the same chamber, and the brake section and the encoder section are fixed using the same member, whereby a hollow actuator having a short axial length can be provided. Moreover, a brake can be securely activated because the braking section uses friction between armatures.
The hollow actuator can be disposed in a joint of a robot arm so that the robot arm can move like a human arm. When a power failure occurs in a factory or when the robot has to maintains a posture at the home position, the robot can easily maintain a correct posture. Because a braking force is obtained by using mechanical friction, an external force can be braked, whereby the brake can be securely activated.

### Brief Description of the Drawings

[Fig. 1] Fig. 1 is a sectional side view of a hollow actuator according to the present invention.

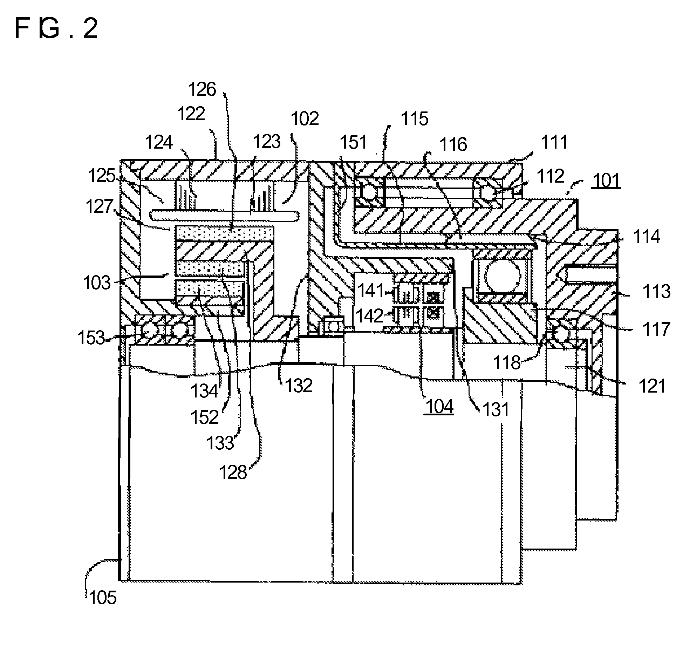

[Fig. 2] Fig. 2 is a sectional side view of a first existing example.
[Fig. 3] Fig. 3 is a sectional side view of a second existing example.

### Reference Numerals

- 1: motor section
- 2: permanent magnet
- 3: stator yoke
- 4: armature coil
- 5: rotor yoke
- 6: bearing
- 7: shield
- 8: wave plug
- 9: reduction gear section
- 91: wave bearing
- 92: circular spline
- 93: flexible spline
- 10: output shaft
- 11: brake section
- 12: brake coil
- 13: brake lining
- 14: armature
- 15: hollow shaft
- 16: encoder section
- 17: LED
- 18: slit substrate
- 19: detector
- 101: harmonic drive gearing
- 102: motor
- 103: brake
- 104: rotation detector
- 105: bracket
- 111: reduction gear frame
- 112:
- 113: output shaft
- 114: circular spline
- 115: flexible turning barrel
- 116: external gear
- 117: wave bearing
- 118: bearing
- 121: motor shaft
- 122: motor frame
- 123: armature coil
- 124: stator coil
- 125: stator
- 126: permanent magnet
- 127: rotor
- 128: motor yoke
- 131: hollow yoke
- 132: field core
- 133: rotation-side permanent magnet
- 134: stationary-side permanent magnet
- 141: stationary section
- 142: rotation section
- 151: field core section
- 152: housing section
- 153: bearing
- 222: rotor
- 221: stator
- 251: magnetic sensor
- 252: angle detection magnet
- 271: wave generator
- 272: flexible spline
- 273: circular spline

### Best Mode for Carrying Out the Invention

Hereinafter, an embodiment of the present invention will be described with reference to the drawings.

### First Embodiment

Fig. 1 is a sectional side view of an embodiment of the present invention. A motor section 1, a permanent magnet 2, a stator yoke 3, an armature coil 4, a rotor yoke 5, a bearing 6, an oil seal 7, a wave plug 8, a reduction gear section 9, an output shaft 10, a brake section 11, a brake coil 12, an armature 13, a field core 14, a hollow shaft 15, an encoder section 16, an LED 17, a slit substrate 18, and a detector 19 are illustrated.
The motor section 1 and the reduction gear section 9 are separated from each other by the oil seal 7. The motor section 1 and the encoder section 16 are separated from each other because the encoder section 16 is attached to a fixing member of the brake coil 12. The motor section 1 and the brake section 11 are disposed in the same chamber.
With this structure, fine dust that is generated in the brake section 11 during braking does not enter the reduction gear section 9 and the encoder section 16. The field core of the brake section 11 also serves as a member for supporting the detector 19 of the encoder section 16 so that commonality of the components is increased. A brake lining 13 is disposed on an end face of the motor section 1. With this structure, the axial length of the hollow actuator can be reduced.
Next, the structure of each section will be described. The motor section 1 includes the stator yoke 3, the armature coil 4 wound around the stator yoke 3, the rotor yoke 5, and the permanent magnet 2 disposed on the rotor yoke 5 so as to face the armature coil 4 with a gap therebetween. The rotor yoke 5 is attached to the hollow shaft 15. The hollow shaft 15 is rotatably supported by the bearing 6, and rotates when the armature coil 4 is energized. The armature coil 4 is terminated and connected to the outside through an opening in the brake section 11.
Next, the reduction gear section will be described. The reduction gear section 9 includes a wave bearing 91, a circular spline 92, and a flexible spline 93. The wave plug 8 is connected to the hollow shaft 15. The wave bearing 91 is joined to the wave plug 8. The flexible spline 93 is fixed to a frame. The circular spline 92 is rotatably supported by the outer periphery of the flexible spline 93. Rotation of the hollow shaft 15 is transmitted to the wave bearing 91 through the wave plug 8 connected to the hollow shaft 15. The rotation is reduced by the gear ratio of the flexible spline 93 relative to the circular spline 92, and output to the output shaft 10.
Next, the brake section will be described. The brake section 11 includes the brake coil 12, the armature 14, the brake lining 13, and a brake spring (not shown). The brake lining 13 is connected to the hollow shaft 15, and rotates together with the hollow shaft 15. When braking, the brake coil 12 is energized, an urging force acts on the brake spring, and the armature 14 and the brake lining 13 contact each other, so that a braking force is generated. With this contact, the actuator can be securely braked.
Next, the encoder section will be described. The encoder section 16 includes the LED 17, the slit substrate 18, and the detector 19. The slit substrate 18 is connected to the hollow shaft 15. Slits that transmit light are formed in the slit substrate 18. The slit substrate 18 is disposed between the LED 17 and the detector 19. The detector 19 receives light emitted from the LED 17 so as to detect a rotation position.
Next, the effect of dust that is generated in the brake section 11 will be described. During braking, friction between the armature 14 and the brake lining 13 generates a braking force. Owing to the friction, abrasive particles with the size of several microns are generated from the components. A friction plate of the brake lining 13 is made of a molded resin, a semi-metallic material, or a sintered alloy. The armature 14 is made of carbon steel. Therefore, the abrasive particles are generated from the friction plate of the armature 13, which has a lower hardness. There is a gap having a width in the range of about 0.3 mm to 0.5 mm between the stator yoke 3 and the permanent magnet 2. The gap is sufficiently large compared with the size of the abrasive particles in the dust. Therefore, even if the abrasive particles enter the gap, the effect of the abrasive particles is extremely small. If, for example, the abrasive particles enter the reduction gear section 9, tooth flanks of the circular spline and the flexible spline may be damaged due to the abrasive particles. If the abrasive particles enter the encoder section 16, light emitted from the LED may be reflected diffusely. Therefore, the motor section 1 and the brake section 11 are disposed in the same chamber for the purpose of reducing the axial length of the hollow actuator.

## Claims

1. A hollow actuator comprising a motor section, a reduction gear section, a brake section, a rotation position detecting section, and a shaft having a hollow shape and transmitting rotation,
wherein the motor section and the brake section are disposed in a same chamber.

2. The hollow actuator according to Claim 1, wherein the reduction gear section, the motor section, the brake section, and the rotation detection section are disposed in this order from a load side, and wherein the motor section and the brake section are disposed in the same chamber.

3. The hollow actuator according to Claim 1, wherein the brake section and the rotation position detecting section have a common flange.

4. A hollow actuator comprising a motor section, a reduction gear section, a brake section, a rotation position detecting section, and a shaft having a hollow shape and transmitting rotation,
wherein the brake section includes a brake coil disposed on a field core, and an armature disposed so as to face the brake coil, wherein the rotation position detecting section includes a detector disposed on a shield plate disposed on the field core, and a slit substrate and an LED that are disposed so as to face the detector, and wherein the field core of the brake serves as a fixing member of the detector.

5. The hollow actuator according to Claim 4, wherein the brake section includes the brake coil disposed on the field core, the armature is disposed so as to face the brake coil, and the armature is disposed in a vicinity of an end of the motor section.

6. The hollow actuator according to Claim 1, wherein an armature coil of the motor section is terminated in the motor section, and a cable extends through an opening in a field core of the brake section.

7. A hollow actuator comprising a motor section, a reduction gear section, a brake section, a rotation position detecting section, and a shaft having a hollow shape and transmitting rotation,
wherein the motor section and the brake section are disposed in a same chamber, and wherein the motor section and the brake section are separated from the reduction gear section and the rotation position detecting section by separation means so that dust from the brake section does not enter the reduction gear section and the rotation position detecting section.

8. The hollow actuator according to Claim 7, wherein the separation means for separating the reduction gear section from the motor section and the brake section is a side plate.
